(19) **Europäisches Patentamt European Patent Office Office européen des brevets**

(11) **EP 3 896 436 B1**

(12) **FASCICULE DE BREVET EUROPEEN**

(45) Date de publication et mention de la délivrance du brevet:
**26.10.2022 Bulletin 2022/43**

(21) Numéro de dépôt: **21175171.4**

(22) Date de dépôt: **09.12.2014**

(51) Classification Internationale des Brevets (IPC):
**G01N 23/04** *(2018.01)* **G06T 7/00** *(2017.01)*
**G06K 9/00** *(2022.01)* **G01N 23/046** *(2018.01)*
**G06V 20/00** *(2022.01)*

(52) Classification Coopérative des Brevets (CPC):
**G01N 23/046; G06V 20/00;** G01N 2223/425;
G01N 2223/426; G01N 2223/615; G01N 2223/63

(54) **PROCÉDÉ DE CARACTÉRISATION D'UNE PIÈCE**

**VERFAHREN ZUR CHARAKTERISIERUNG EINES WERKSTÜCKS**

**METHOD FOR CHARACTERISING A PART**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2013 FR 1363095**

(43) Date de publication de la demande:
**20.10.2021 Bulletin 2021/42**

(62) Numéro(s) de document de la (des) demande(s) initiale(s) en application de l'article 76 CBE:
**14827807.0 / 3 084 405**

(73) Titulaires:
• **SAFRAN AIRCRAFT ENGINES**
**75015 Paris (FR)**
• **Centre national de la recherche scientifique**
**75016 Paris (FR)**
• **Ecole Normale Supérieure Paris-Saclay**
**91190 Gif-sur-Yvette (FR)**

(72) Inventeurs:
• **SCHNEIDER, Julien**
**77550 MOISSY CRAMAYEL (FR)**
• **HILD, François**
**92290 CHATENAY MALABRY (FR)**
• **LECLERC, Hugo**
**94230 CACHAN (FR)**
• **ROUX, Stéphane**
**93110 ROSNY SOUS BOIS (FR)**

(74) Mandataire: **Cabinet Beau de Loménie**
**158, rue de l'Université**
**75340 Paris Cedex 07 (FR)**

(56) Documents cités:
**US-A1- 2010 194 749**

• **Hugo Leclerc ET AL: "Digital volume correlation: what are the limits to the spatial resolution?", , 28 juillet 2013 (2013-07-28), pages 1-42, XP055129980, Extrait de l'Internet: URL:http://hal.inria.fr/docs/00/84/87/21/P DF/MI2012-ccsd.pdf [extrait le 2014-07-18]**
• **BING PAN ET AL: "Internal displacement and strain measurement using digital volume correlation: a least-squares framework", MEASUREMENT SCIENCE AND TECHNOLOGY, IOP, BRISTOL, GB, vol. 23, no. 4, 045002, 27 février 2012 (2012-02-27), pages 1-13, XP020221141, ISSN: 0957-0233, DOI: 10.1088/0957-0233/23/4/045002**
• **ALGHAMDI A ET AL: "Multi-scale 3D image-based modelling of a carbon/carbon composite", MODELLING AND SIMULATION IN MATERIALS SCIENCE AND ENGINEERING, IOP PUBLISHING, BRISTOL, GB, vol. 21, no. 8, 085014, 8 novembre 2013 (2013-11-08), pages 1-13, XP020254298, ISSN: 0965-0393, DOI: 10.1088/0965-0393/21/8/085014 [extrait le 2013-11-08]**

## Description

Contexte technique

L'invention s'inscrit dans le domaine de la conception, de la caractérisation et du suivi de pièces pour l'industrie, notamment des pièces devant subir des sollicitations mécaniques importantes, comme par exemple des pièces de moteurs d'avions.

On connait la technique de tomographie aux rayons X (CT pour « *Computed Tomography* »). Ce moyen expérimental exploite l'absorption différentielle des rayons X par différents matériaux pour reconstruire, par le calcul, à partir d'une série de radiographies, une image tridimensionnelle de la pièce étudiée. L'information contenue dans les images de tomographie est précieuse car elle concerne l'ensemble du volume de la pièce et donne accès non seulement à la microstructure de celle-ci mais aussi potentiellement à ses défauts.

Cependant, cette richesse est aussi à l'origine de deux difficultés majeures. D'une part, l'acquisition de l'information finement résolue spatialement nécessite un nombre considérable de radiographies, d'où un temps d'acquisition des images importants, et la nécessité de disposer de moyens de stockage de données importants. D'autre part, la recherche de défauts est elle-même une opération délicate et exigeante, difficile à automatiser.

On connaît aussi des techniques de comparaison d'images proches entre elles, connues sous les noms de techniques de corrélation d'images ou recalage d'images. Ces techniques consistent à mettre en coïncidence le mieux possible les deux images en déterminant pour ce faire une transformation appartenant à une classe choisie. La différence résiduelle (ou « résidus ») entre les images après l'application de cette transformation met en évidence des changements (ou des défauts, suivant le contexte) qui ne sont pas effacés par la transformation.

Entre deux images, des modifications ont souvent lieu sous la forme de mouvements de corps rigides, et aussi sous la forme de grossissement ou de déformations. Ces modifications peuvent constituer la classe de transformation choisie. Il est alors possible de calculer les résidus pour la transformation optimale au sein de cette classe particulière.

Cette notion peut être formalisée de la manière suivante. On note $f_1(x)$ et $f_2(x)$ les valeurs de niveaux de gris pour tout point x de deux images. On introduit également l'ensemble **T** des transformations (la classe de transformations), tel que pour toute transformation $T \in$ **T**, l'image f devient l'image transformée T[f] (T est une fonctionnelle agissant sur l'ensemble de l'image f). Il est utile d'identifier la transformation T\* (transformation optimale) qui réalise le minimum

$$T^* = \mathrm{argmin}\,_{T \in \mathbf{T}}\,||f_1(\boldsymbol{x}) - T[f_2(\boldsymbol{x})]||$$

Le résidu est une nouvelle image g définie comme suit

$$g(\boldsymbol{x}) = f_1(\boldsymbol{x}) - T^*[f_2(\boldsymbol{x})]$$

Par ailleurs, une classe générique de transformations est celle induite par l'ensemble des champs de déplacement continus, u(x), qui est telle

$$T_u[f(\boldsymbol{x})] = f(\boldsymbol{x} + \boldsymbol{u}(\boldsymbol{x}))$$

La différence topologique $\Delta(f_1, f_2)$ des deux images est le champ de résidu g obtenu lorsque la classe sur laquelle est effectuée l'optimisation est la classe des champs de déplacement continus.

Cependant, il est aussi possible, par exemple, d'altérer la brillance et le contraste d'une image par une transformation affine comme

$$T_g[f(\boldsymbol{x})] = \alpha f(\boldsymbol{x}) + \beta$$

On peut de plus combiner plusieurs transformations de ce type, contraindre les paramètres ou les champs intervenant à satisfaire à des contraintes spécifiques, ou leur donner plus de liberté. Par exemple les deux paramètres des transformations affines présentés ci-dessus ($\alpha$ et $\beta$) peuvent être calculés en fonction des coordonnées du voxel concerné.

Si quelques programmes informatiques commerciaux de corrélation d'images existent, il n'est pas courant que ceux-ci donnent accès à la transformation brute et complète T\* minimisant la différence entre les images, car les champs de déplacement ne sont souvent pas construits de manière globale, mais plutôt par interpolation de déplacements locaux discrets. De plus les corrections de brillance et de contraste sont souvent inaccessibles. Dans la pratique, la transformation T\* n'est donc souvent pas exploitée, alors qu'on utilise la différence topologique par exemple pour reconnaitre un visage, un objet ou une forme spécifique, par exemple pour l'imagerie médicale.

Dans certaines utilisations, comme la reconnaissance automatique, on n'exploite du recalage d'image que l'association à une référence lorsque la norme du résidu est jugée faible. Enfin, le résidu ou la différence topologique, même si l'utilisateur du programme informatique peut être invité à les utiliser à l'écran, sont rarement produits en tant que résultats exportables de logiciels de corrélation d'images.

De l'état de la technique antérieure, on connait le document "Digital volume correlation: what are the limits to the spatial resolution?" (Hugo Leclerc et al, Mechanics & Industry Volume 13, Number 6, 2012 Giens, pages 361 - 371) qui décrit un procédé dans lequel on obtient des images de tomographie aux rayons X et dans lequel on met en œuvre une corrélation.

## Définition de l'invention et avantages associés

Pour résoudre les difficultés évoquées ci-dessus, il est ici proposé un procédé de caractérisation d'une pièce comprenant une étape d'obtention d'une image de tomographie aux rayons X de la pièce, puis une étape de corrélation de ladite image avec une référence comprenant une image de la pièce construite à partir d'un modèle de conception assistée par ordinateur, **caractérisé en ce que** l'étape de corrélation comprend une recherche dans un ensemble prédéfini - ou classe - de transformations d'images de tomographie aux rayons X, d'une transformation qui minimise la différence entre ladite image et la référence pour caractériser l'intérieur de la pièce.

L'ensemble de transformations peut notamment, mais pas nécessairement, inclure les champs de déplacement continus, chaque champ étant éventuellement discrétisé. De préférence, le procédé utilise une paramétrisation continue dudit ensemble de transformations.

Les avantages de ce procédé ressortent de la discussion suivante. Il apparaît en effet que la paramétrisation de l'espace **T** pertinent est de beaucoup plus faible dimension que l'image elle-même.

Il est en effet, au moins en théorie, possible de superposer exactement deux images de tomographie d'un même objet après un mouvement de corps rigide à 6 degrés de liberté, l'application d'un facteur d'échelle à 1 degré de liberté, et un ajustement linéaire des niveaux de gris, à 2 degrés de liberté. Ainsi, pour corréler ces deux images, 9 inconnues sont à déterminer. Ce nombre 9 est la dimensionnalité de l'espace **T** et est à comparer à la complexité de la détermination d'une image entière, de l'ordre de 1 Gvoxel, soit $10^9$ inconnues. Ainsi connaître la transformation T* permet de faire une économie importante de données. Cela permet aussi d'obtenir directement la différence topologique $\Delta(f_1, f_2)$ et d'y repérer des défauts incompatibles avec la classe de transformation **T**. Des transformations plus complexes que celles évoquées ci-dessus peuvent aussi être introduites.

Cette exploitation permet de fournir une détermination rapide de l'image 3D d'une pièce, grâce à la caractéristique présentée ci-avant et selon laquelle il est utilisé un ensemble de transformations à appliquer à partir d'un ou plusieurs objets de référence, utilisant un nombre de radiographies plus faible que les méthodes habituelles. Ce gain en rapidité de l'acquisition implique un temps d'immobilisation du tomographe réduit. Cela se fait au prix d'une moindre redondance de l'information, puisque moins de radiographies sont effectuées, ainsi que d'une augmentation des calculs nécessaires, mais ces deux aspects ne sont pas handicapants dans de nombreuses situations.

L'ensemble de transformations comprend par exemple au moins un ensemble des déplacements continus (avec ou sans changement d'échelle), un ensemble d'altérations de brillance et de contraste, ou un ensemble de changements d'échelle (avec ou sans déplacement continu).

Dans un mode de réalisation non couvert par la portée des revendications, la référence comprend l'image d'une pièce étalon. On peut notamment, ainsi ou autrement, déterminer si l'exemplaire particulier de la pièce est tolérable, par exemple à l'aide d'une transformation identifiée à l'issue de la recherche. On précise que dans ce cas le caractère tolérable de la pièce peut être formalisé en exprimant des conditions sur la transformation identifiée T*.

Selon l'invention, la référence comprend une image, qualifiée de virtuelle, de la pièce construite à partir d'un modèle de conception assistée par ordinateur. L'ensemble de transformations peut comprendre au moins les transformations correspondant à des modifications d'au moins un paramètre d'un modèle de la pièce. Le procédé peut aussi, en combinaison ou non avec ces derniers aspects, comprendre une modification de la paramétrisation d'un modèle de conception assistée par ordinateur de la pièce à l'aide d'une transformation identifiée à l'issue de la recherche.

Dans une variante, la référence comprend une représentation explicite des frontières de la pièce et de ses éventuels composants ou éléments. Ledit ensemble de transformations peut alors comprendre au moins une classe de transformations conservant la topologie. Si la pièce comporte plusieurs composants, la transformation optimale identifiée T* conduira à une segmentation de l'image conforme à la connaissance *a priori* de l'objet. La segmentation peut aussi être effectuée autrement, mais toujours à l'aide de la transformation identifiée.

Dans une variante, la référence comprend la représentation d'un motif élémentaire, par exemple un motif périodique modulé en phase.

Le procédé peut être mis en œuvre avec comme référence une image de tomographie aux rayons X de la pièce réalisée antérieurement, dans un exemple non couvert par la portée des revendications, la pièce ayant, entre les réalisations des deux images, supporté une charge mécanique. La différence topologique permettra alors d'identifier des défauts (au sens défini précédemment comme non résorbables par la classe de transformations choisie) et induits par le chargement. On peut alors déterminer, ainsi ou autrement, si la nature du défaut et en particulier sa taille, sa forme ou sa localisation est tolérable vis-à-vis d'un cahier des charges fonctionnel, de règles métiers ou encore de contraintes normatives.

Le procédé peut notamment être mis en œuvre avec une pièce en matériau composite, ou une aube de turboréacteur pour aéronef, qui peut être justement en matériau composite à renfort fibreux, par exemple tissé.

Liste des figures

La présentation de l'invention va maintenant être poursuivie en relation avec les figures annexées.

La figure 1 présente un exemple non couvert par la portée des revendications. Les figures 2 et 3 illustrent par des cet exemple.
La figure 4 présente un mode de réalisation de l'invention. La figure 5 illustre ce mode de réalisation.
La figure 6 présente un autre mode de réalisation de l'invention.

Description de modes de réalisation

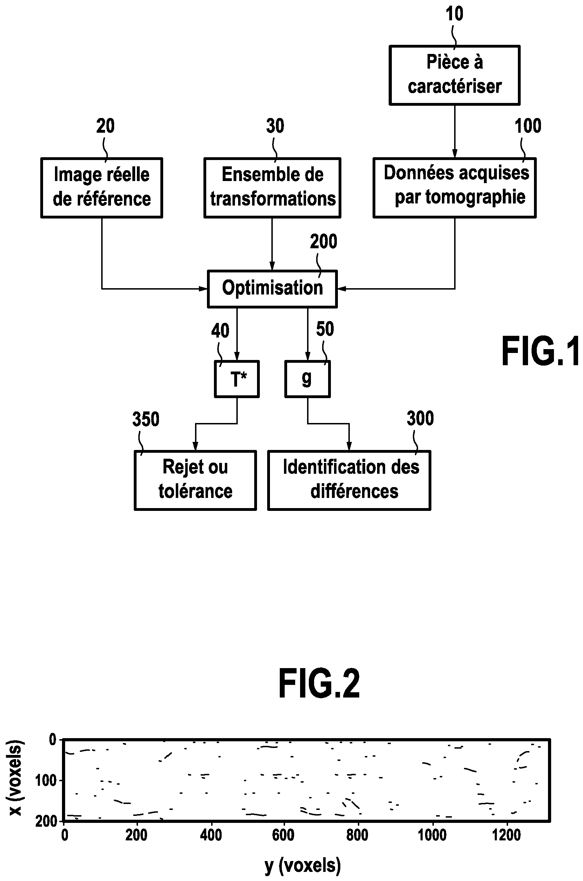

Dans un exemple non couvert par la portée des revendications car n'utilisant pas d'image construite à partir d'un modèle de conception assistée par ordinateur, représenté en **figure 1**, on utilise une image réelle de référence 20, comme celle d'une pièce servant d'étalon ou de jauge. On reconstruit une pièce 10, par exemple une pièce en matériau composite, dans une image brute de tomographie de la pièce 10, constituée à partir d'une quantité (nombre de projections) de données de tomographie 100 qui peut être faible. La reconstruction est faite à l'aide d'un ensemble de transformations 30 jugées réalistes. Le calcul est basé sur une étape de recherche et d'identification de la transformation T* (référence 40) dans l'ensemble 30. Cette identification est faite par recherche du minimum (optimisation 200) comme cela a été présenté en introduction. Simultanément, la différence topologique $\Delta$ associée (référence 50) est déterminée.

Dans une variante, on repère et identifie ensuite efficacement les différences de la pièce étudiée par rapport à la pièce étalon, à l'aide de la différence topologique $\Delta$ (référence 50), au cours d'une étape 300. Par exemple, comme présenté en **figure 2,** la comparaison des tomographies pour une pièce en matériau composite avant et après essais sans charge a permis de mettre en avant de manière très claire la présence de mésofissures.

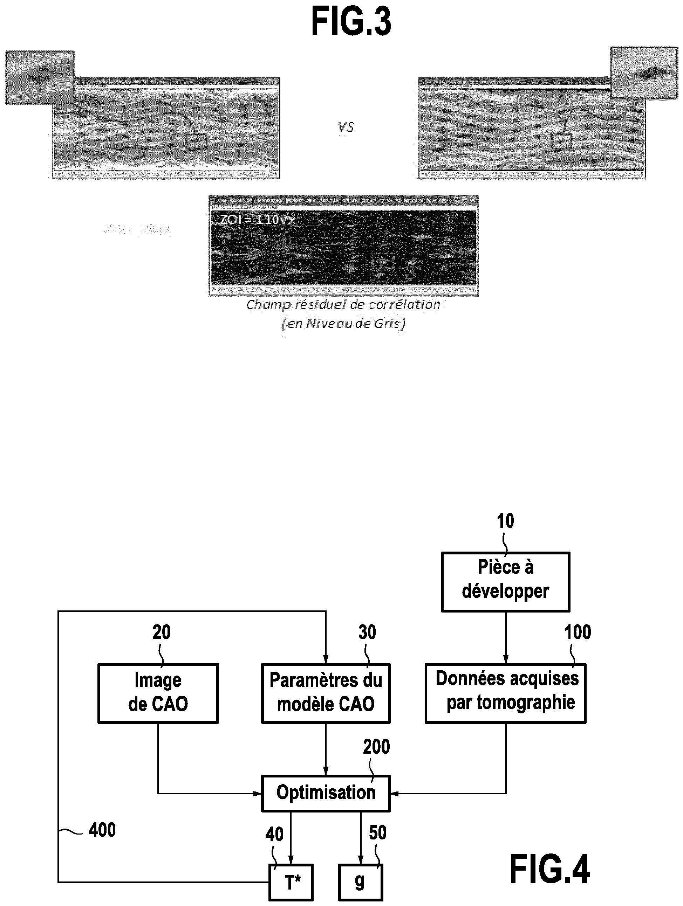

On peut aussi réaliser une corrélation entre deux échantillons différents et ainsi s'il s'agit de pièces en matériau composite, mettre en lumière la différence du point de vue du tissage entre les deux échantillons. Cela est représenté en **figure 3.**

On peut ainsi, de manière générale, effectuer des contrôles non destructifs (CND) sur les pièces en matériau composite, par exemple des aubes de turboréacteurs. La technique présentée permet des gains de temps pour le contrôle, les acquisitions et le stockage des données. Ainsi, par exemple, au cours d'une étape 350, on peut décider, sur la simple base de la transformation T*, si la pièce doit être conservée ou rejetée.

Dans un mode de réalisation, représenté en **figure 4,** on réalise une mise en correspondance de deux images, l'une réelle et l'autre qualifiée de virtuelle, par exemple une image 20 construite à partir du modèle CAO (conception assistée par ordinateur) de la pièce.

Dans ce cas, la paramétrisation 30 du modèle CAO peut constituer en elle-même une classe spécifique **T** de transformations. Ainsi, une exploitation des données de tomographie profitant de l'image du modèle CAO peut être conduite en écrivant l'image de tomographie directement dans un langage descripteur permettant un dialogue avec l'équipe de conception (CAO) de la pièce.

Le dialogue consiste alors à fournir sous la forme du modèle CAO une bonne prédétermination de la solution pour aider à la construction de l'image de tomographie (étape 200) à partir des données de tomographie. L'image ainsi construite permet en retour, par les paramètres de la transformation T* identifiée, dans une étape 400, de corriger le modèle CAO pour qu'il soit le plus fidèle possible à la pièce effectivement réalisée.

Le procédé est mis en œuvre jusqu'à convergence ou stationnarité de l'algorithme utilisé, par exemple dans un contexte simple de niveaux de gris ajustés.

Les défauts d'orientation ou d'alignement peuvent en effet conditionner la réponse de la structure composite complète, et un ajustement initial tel que proposé est une bonne manière d'améliorer et valider un modèle CAO prenant en compte de telles imperfections.

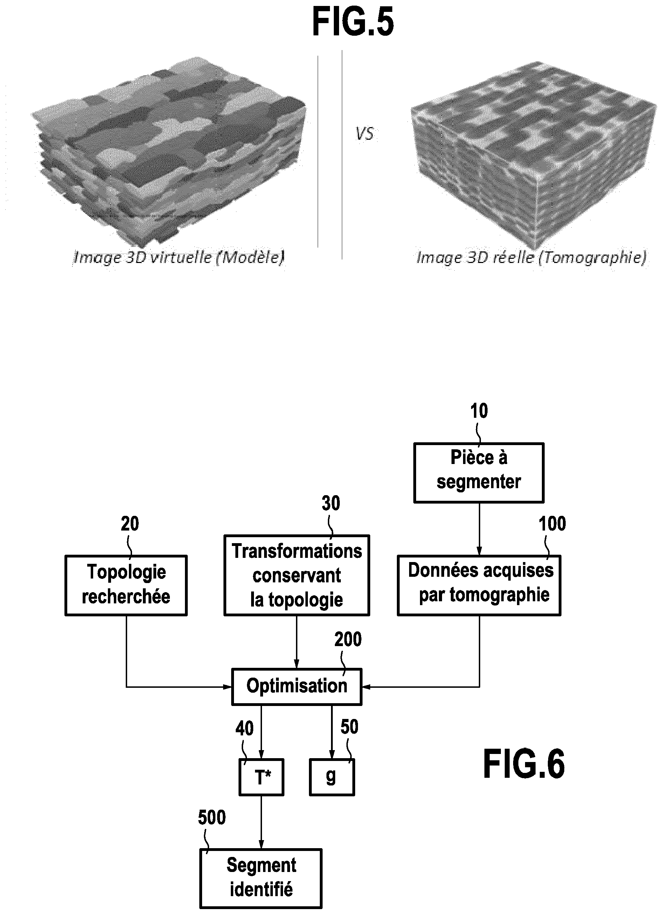

On sait générer des modèles 3D discrétisés en voxels élémentaires ou représentés par un modèle paramétrique, ou de conception assistée par ordinateur (CAO), basés sur une connaissance *a priori* du réseau tissé d'un matériau composite à renfort fibreux. Il est donc possible d'effectuer une corrélation entre l'image d'une pièce et celle issue d'un modèle et de modifier les paramètres d'entrée du modèle, c'est-à-dire les directions des torons ainsi que leurs dimensions. A titre d'exemple, la **figure 5** présente une image issue de la tomographie et une image d'un modèle.

Dans une variante, si le cheminement des fils n'est pas inclus dans l'image de référence obtenue par un modèle CAO, on détermine les chemins des torons directement à partir de l'image de tomographie, par exemple en utilisant un algorithme de « *tracking* » (ou suivi), auquel on fournit les résultats de la corrélation avec l'image de référence obtenue par un modèle CAO.

Dans une variante représentée en **figure 6,** on effectue une segmentation des images. La segmentation 500 consiste à identifier des composants spécifiques à l'intérieur d'une image, par exemple des torons ou des fibres, ou des motifs élémentaires (e.g. motif périodique modulé en phase), éventuellement contenus dans une banque de données constituant un dictionnaire. Si l'on dispose de la représentation théorique (topologie recherchée 20) de l'objet à identifier, on peut faire une corrélation d'images 3D entre cet objet et les données 100 obtenues par tomographie. Les transformations 30 utilisées sont faites à topologie imposée, et permettent de conserver la topologie de l'objet de référence de manière robuste.

On situe ainsi dans l'image, à l'aide de la transformation identifiée T*, le composant défini dans l'image de référence, et déformé pour se conformer à l'image réelle. Ainsi, si l'on cherche une courbe fermée, il suffit de partir d'une image de ligne fermée idéale comme un cercle parfait pour le laisser progressivement évoluer vers la ligne telle qu'elle est présente dans l'image du milieu.

Cette approche est plus robuste que des techniques habituelles de seuillage et segmentation qui ne préservent pas automatiquement la topologie correcte de l'objet recherché. Ainsi, avec ces techniques, on obtient des points manquants dans une courbe qui devrait être fermée, ou une courbe épaisse alors qu'elle devrait être fine. La segmentation telle que mise en œuvre selon le procédé décrit, c'est-à-dire de manière automatique en se fondant sur un élément topologique défini préalablement, permet de minimiser des étapes intermédiaires de filtrage des images où la partition entre bruit, biais et mesure n'est pas toujours claire, et donc où l'information est facilement dégradée par un tel filtrage.

L'invention n'est pas limitée aux modes de réalisation présentés, mais s'étend à toutes les variantes dans le cadre de la portée des revendications.

## Revendications

1.  Procédé de caractérisation d'une pièce (10) comprenant une étape d'obtention d'une image (100) de tomographie aux rayons X de la pièce, puis une étape de corrélation (200) de ladite image avec une référence (20) comprenant une image de la pièce construite à partir d'un modèle de conception assistée par ordinateur, **caractérisé en ce que** l'étape de corrélation (200) comprend une recherche, dans un ensemble prédéfini (30) de transformations d'images de tomographie aux rayons X, d'une transformation (40) qui minimise la différence (50) entre l'image et la référence pour caractériser (300, 350 ; 400 ; 500) l'intérieur de ladite pièce (10).

2.  Procédé de caractérisation d'une pièce selon la revendication 1, utilisant une paramétrisation continue dudit ensemble (30) de transformations.

3.  Procédé de caractérisation d'une pièce selon la revendication 1 ou la revendication 2, dans lequel ledit ensemble (30) de transformations comprend au moins un ensemble des déplacements continus, un ensemble d'altérations de brillance et de contraste, ou un ensemble de changements d'échelle.

4.  Procédé de caractérisation d'une pièce selon l'une des revendications 1 à 3, dans lequel on détermine (350) si la pièce (10) est tolérable à l'aide d'une transformation extraite (40).

5.  Procédé de caractérisation d'une pièce selon l'une des revendications 1 à 4, dans lequel ledit ensemble (30) de transformations comprend au moins les transformations correspondant à des modifications d'au moins un paramètre d'un modèle de la pièce.

6.  Procédé de caractérisation d'une pièce selon l'une des revendications 1 à 5, comprenant une modification (400) de la paramétrisation d'un modèle de conception assistée par ordinateur de la pièce à l'aide d'une transformation identifiée à l'issue de la recherche.

7.  Procédé de caractérisation d'une pièce selon l'une des revendications 1 à 6, dans lequel ledit ensemble (30) de transformations comprend au moins une classe de transformations conservant la topologie.

8.  Procédé de caractérisation d'une pièce selon l'une des revendications 1 à 7, dans lequel la référence (20) comprend une représentation explicite des frontières d'un élément de la pièce.

9.  Procédé de caractérisation d'une pièce selon l'une des revendications 1 à 8, comprenant une segmentation (500) de l'image à l'aide d'une transformation identifiée à l'issue de la recherche.

10. Procédé de caractérisation d'une pièce selon l'une des revendications 1 à 9, dans lequel la référence (20) comprend la représentation d'un motif élémentaire.

11. Procédé de caractérisation d'une pièce selon l'une des revendications 1 à 10, dans lequel la pièce (10) est une pièce en matériau composite.

12. Procédé de caractérisation d'une pièce selon l'une des revendications 1 à 11, dans lequel la pièce (10) est une aube de turboréacteur pour aéronef.

13. Procédé de caractérisation d'une pièce selon l'une des revendications 1 à 12, comprenant l'obtention de la différence topologique entre l'image et la référence.

## Patentansprüche

1.  Verfahren zur Charakterisierung eines Teils (10), umfassend einen Schritt des Erhalts eines Röntgentomographie-Bildes (100) des Teils, dann einen Schritt der Korrelierung (200) des Bildes mit einer Referenz (20), die ein ausgehend von einem CAD-Modell konstruiertes Bild umfasst, **dadurch gekennzeichnet, dass** der Schritt der Korrelierung (200) eine Suche einer Transformation (40), welche die Differenz (50) zwischen dem Bild und der Referenz minimiert, in einer vordefinierten Menge (30) von Transformationen von Röntgentomographie-Bildern umfasst, um das Innere des Teils (10) zu charakterisieren (300, 350; 400; 500).

2. Verfahren zur Charakterisierung eines Teils nach Anspruch 1, das eine kontinuierliche Parametrisierung der Menge (30) von Transformationen verwendet.

3. Verfahren zur Charakterisierung eines Teils nach Anspruch 1 oder Anspruch 2, wobei die Menge (30) von Transformationen zumindest eine Menge von kontinuierlichen Verschiebungen, eine Menge von Veränderungen der Helligkeit und des Kontrasts oder eine Menge von Veränderungen des Maßstabs umfasst.

4. Verfahren zur Charakterisierung eines Teils nach einem der Ansprüche 1 bis 3, wobei mithilfe einer extrahierten Transformation (40) bestimmt (350) wird, ob das Teil (10) akzeptabel ist.

5. Verfahren zur Charakterisierung eines Teils nach einem der Ansprüche 1 bis 4, wobei die Menge (30) von Transformationen zumindest die Transformationen umfasst, welche Modifikationen zumindest eines Parameters eines Modells des Teils entsprechen.

6. Verfahren zur Charakterisierung eines Teils nach einem der Ansprüche 1 bis 5, umfassend eine Modifikation (400) der Parametrisierung eines CAD-Modells des Teils mithilfe einer Transformation, die als Ergebnis der Suche identifiziert wurde.

7. Verfahren zur Charakterisierung eines Teils nach einem der Ansprüche 1 bis 6, wobei die Menge (30) von Transformationen zumindest eine Klasse von Transformationen umfasst, welche die Topologie erhalten.

8. Verfahren zur Charakterisierung eines Teils nach einem der Ansprüche 1 bis 7, wobei die Referenz (20) eine explizite Repräsentation der Grenzen eines Elements des Teils umfasst.

9. Verfahren zur Charakterisierung eines Teils nach einem der Ansprüche 1 bis 8, umfassend eine Segmentierung (500) des Bilds mithilfe einer Transformation, die als Ergebnis der Suche identifiziert wurde.

10. Verfahren zur Charakterisierung eines Teils nach einem der Ansprüche 1 bis 9, wobei die Referenz (20) die Repräsentation eines elementaren Musters umfasst.

11. Verfahren zur Charakterisierung eines Teils nach einem der Ansprüche 1 bis 10, wobei das Teil (10) ein Teil aus Verbundmaterial ist.

12. Verfahren zur Charakterisierung eines Teils nach einem der Ansprüche 1 bis 11, wobei das Teil (10) eine Schaufel eines Turbinenstrahlwerks für ein Luftfahrzeug ist.

13. Verfahren zur Charakterisierung eines Teils nach einem der Ansprüche 1 bis 12, umfassend den Erhalt der topologischen Differenz zwischen dem Bild und der Referenz.

**Claims**

1. A method of characterizing a part (10) comprising a step of obtaining an X-ray tomography image (100) of the part and then a step (200) of correlating said image with a reference (20) comprising an image of the part constructed from a computer assisted design model, the method being **characterized in that** the correlation step (200) comprises searching among a predefined set (30) of X-ray tomography image transformations for a transformation (40) that minimizes the difference (50) between the image and the reference in order to characterize (300, 350; 400; 500) the inside of said part (10).

2. A method according to claim 1 for characterizing a part, using a continuous parameterization of said set (30) of transformations.

3. A method according to claim 1 or claim 2 for characterizing a part, wherein said set (30) of transformations includes at least one set of continuous displacements, at least one set of alterations of brightness and of contrast, or at least one set of scale changes.

4. A method according to any one of claims 1 to 3, for characterizing a part, wherein it is determined (350) whether the part (10) is acceptable by using an extracted transformation (40).

5. A method according to anyone of claims 1 to 4, for characterizing a part, wherein said set (30) of transformations comprises at least the transformations corresponding to modifications of at least one parameter of a model of the part.

6. A method according to any one of claims 1 to 5, for characterizing a part, including modifying (400) the parameterization of a computer assisted design model of the part by using a transformation identified at the end of the search.

7. A method according to any one of claims 1 to 7 for characterizing a part, wherein said set (30) of transformations comprises at least a class of transformations that conserve topology.

**8.** A method according to any one of claims 1 to 7 for characterizing a part, wherein the reference (20) comprises an explicit representation of the boundaries of an element of the part.

**9.** A method according to any one of claims 1 to 8 for characterizing a part, including segmenting (500) the image by using a transformation identified at the end of the search.

**10.** A method according to any one of claims 1 to 9 for characterizing a part, wherein the reference (20) comprises the representation of an elementary pattern.

**11.** A method according to any one of claims 1 to 10 for characterizing a part, wherein the part (10) is a composite material part.

**12.** A method according to any one of claims 1 to 11 for characterizing a part, wherein the part (10) is an aircraft turbojet blade.

**13.** A method according to any one of claims 1 to 12 for characterizing a part, comprising obtaining the topological difference between the image and the reference.

10

Pièce à
caractériser

20

Image réelle
de référence

30

Ensemble de
transformations

100

Données acquises
par tomographie

200

Optimisation

40

T*

50

g

350

Rejet ou
tolérance

300

Identification des
différences

# FIG.1

# FIG.2

x (voxels)

y (voxels)

# FIG.3

VS

ZOI = 110vx

Champ résiduel de corrélation
(en Niveau de Gris)

**FIG.4**

# FIG.5

*Image 3D virtuelle (Modèle)*          *VS*          *Image 3D réelle (Tomographie)*

**10**
Pièce à segmenter

**30**

**20**
Topologie recherchée

Transformations conservant la topologie

**100**
Données acquises par tomographie

**200**
Optimisation

**40**
T*

**50**
g

# FIG.6

**500**
Segment identifié

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **HUGO LECLERC et al.** Digital volume correlation: what are the limits to the spatial resolution?. *Mechanics & Industry,* 2012, vol. 13 (6), 361-371